# EUROPEAN PATENT APPLICATION

(11) **EP 4 851 207 A1**
(43) Date of publication of application: **09.12.2026**
(21) Application number: 25180230.2
(22) Date of filing: 02.06.2025
(51) Int. Cl.: C08G 18/42, C08G 63/12, C08G 63/85, C09D 175/06, C09J 175/06

(54) **PROCESS FOR THE PREPARATION OF POLYESTER POLYOLS**

(71) Applicant: BASF SE, 67056 Ludwigshafen am Rhein (DE)
(72) Inventor: Levent, Emre, 60487 Frankfurt am Main (DE); Matt, Yannick, 67056 Ludwigshafen am Rhein (DE); Joost, Maximilian, 67056 Ludwigshafen am Rhein (DE); Hammer, Larissa, 31582 Nienburg (DE)
(74) Representative: BASF IP Association

(57) **Abstract**

The present invention relates to a process for the preparation of polyester polyols, which process comprises the step of reacting at least one compound, oligomer or polymer carrying at least one acidic group or a derivative thereof (**A1**) and at least one polyol not carrying an acidic group (**B1**) and optionally at least one monoalcohol not carrying an acidic group (**B2**) in the presence of a catalyst of formula

((R^{1a})²⁻)ₓ((R^{1b})⁻)_{y}((R²)⁻)_{z}(M^{a})⁴⁺ (**I**)

wherein
(R^{1a})²⁻ is a dianion of formula 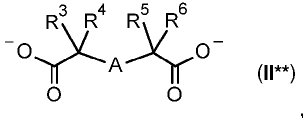 (R^{1b})⁻ is an anion of formula 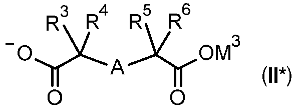 and
(R²)⁻ is HO⁻, R⁸-O⁻ , halide anion, HO-C(=O)-O⁻, R⁹-S⁻, or an anion of formula 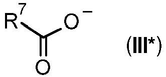 wherein
R^{7,} R⁸ and R⁹ are an organic residue, with the proviso that the anion of formula (III*) is different from the anion of formula (II*),
(M^{a})⁴⁺ is a tetravalent metal,
x is 0, 1 or 2, y is 0, 1, 2, 3 or 4, z is 0,1, 2 or 3, with the proviso that the sum of 2x + y + z = 4,
and to polyester polyols obtainable by the process of the present invention as well as to the use of these polyester polyols for the preparation of polyurethane.

## Description

The present invention relates to a process for the preparation of polyester polyols as well as to polyester polyol obtainable by this process and to the use of these polyester polyols for the preparation of polyurethanes.

Polyester polyols have many applications.

Polyester polyols can be used for food-contact applications such as polyester polyol films and plastic water bottles as well as in UV-curable varnish applications

Polyester polyols can also be used as components for the preparation of aqueous or nonaqueous polyurethanes. Polyurethanes can be used, for example, as binders in coating compositions such as ink or paint compositions, as binders in adhesive compositions, as foams, for example as flexible foams in seating applications and for mattresses and pillows, as rigid foams for insulation applications and as microcellular foams for footwear, or as elastomers, for example as compact elastomers for resin casting.

For economic reasons, it is always desirable to have a process for the preparation of polyester polyols which shows a short reaction time. In addition, it is desirable that the catalyst used in the process for the preparation of polyester polyol is less toxic than catalysts such as dibutyl tin dilaurate.

It was the object of the present invention to provide a process for the preparation of polyester polyols, which process comprises the step of reacting at least one compound, oligomer or polymer carrying at least one acidic group or a derivative thereof and at least one polyol not carrying an acidic group in the presence of a catalyst, which process shows a short reaction time.

This object is solved by the process of claim 1 and the polyester polyol of claim 17.

The process of the present invention is a process for the preparation of polyester polyols, which process comprises the step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** in the presence of a catalyst of formula

((R^{1a})²⁻)ₓ((R^{1b})⁻)_{y}((R²)⁻)_{z}(M^{a})⁴⁺ **(I)**

wherein
(R^{1a})²⁻ is a dianion of formula 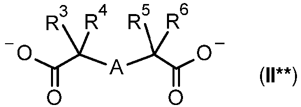
wherein
R³, R⁴, R⁵ and R⁶ are mutually independently an unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal
   and
A is unsubstituted or at least monosubstituted linear C₃₋₃₀-alkylene, wherein the substituents are selected from the group consisting of -OH, halogen, -C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, - S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇-₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
(R^{1b})⁻ is an anion of formula 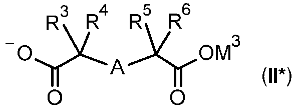
R³, R⁴, R⁵ and R⁶ are mutually independently an unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
   and
A is unsubstituted or at least monosubstituted linear C₃₋₃₀-alkylene, wherein the substituents are selected from the group consisting of -OH, halogen, -C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, - S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇-₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
M³ is H or metal,
   and
(R²)⁻ is HO⁻, R⁸-O⁻, halide anion, HO-C(=O)-O⁻, R⁹-S⁻, or an anion of formula 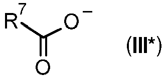
wherein
R^{7,} R⁸ and R⁹ are an organic residue, with the proviso that the anion of formula (III*) is different from the anion of formula (II*),
(M^{a})⁴⁺ is a tetravalent metal,
x is 0, 1 or 2,
y is 0, 1, 2, 3 or 4,
z is 0,1, 2 or 3
with the proviso that the sum of 2x + y + z = 4.

Polyester polyols are compounds, oligomers or polymers comprising at least two ester groups.

Polymers comprise at least two repeating units and have a number-average molecular weight of at least 800 g/mol.

Oligomers comprise at least two repeating units and have a number-average molecular weight of below 800 g/mol.

The number-average molecular weight of the oligomer and polymer can be determined by methods known in the art, for example by gel permeation chromatography.

Compounds and monomers do not comprise a repeating unit.

The molecular weight of a compound can be determined by mass spectrometry.

Monoalcohols have an OH functionality of below 1.5.

The OH functionality of a monoalcohol is (hydroxyl number monoalcohol [g KOH/g] x molecular weight monoalcohol)/molecular weight KOH. If the monoalcohol is an oligomer or polymer, the number-average molecular weight of the monoalcohol is used, which can be determined using gel permeation chromatography calibrated to a polystyrene standard. The molecular weight of KOH is 56 g/mol. The hydroxyl number of a monoalcohol can be determined according to DIN53240, 2016.

Polyols have an OH functionality of at least 1.5.

The OH functionality of a polyol is (hydroxyl number polyol [g KOH/g] x molecular weight polyol)/molecular weight KOH. If the polyol is an oligomer or polymer, the number-average molecular weight of the polyol is used, which can be determined using gel permeation chromatography calibrated to a polystyrene standard. The molecular weight of KOH is 56 g/mol. The hydroxyl number of a polyol can be determined according to DIN53240, 2016.

Aromatic compounds, oligomers and polymers are compounds, oligomers and polymers that comprise at least one aromatic or heteroaromatic ring.

Not aromatic cyclic compounds, oligomers and polymers are compounds, oligomers and polymers that comprise at least one not aromatic ring but no aromatic or heteroaromatic ring.

Aliphatic compounds, oligomer and polymer are compounds, oligomers and polymers that do not comprise an aromatic, heteroaromatic or a not aromatic ring.

An ethylenically unsaturated group can be any ethylenically unsaturated group that can polymerize by free radical mechanism. Examples of ethylenically unsaturated groups are 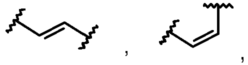 acryloyl, methacryloyl, vinyl and allyl groups.
Methacryloyl is of formula -C(=O)-C(CH₃)=CH₂.
Acryloyl is of formula -C(=O)-CH=CH₂.

C₁₋₄-alkyl, C₁₋₆-alkyl, C₁₋₁₀-alkyl and C₁₋₃₀-alkyl can be branched or linear. Examples of C₁₋₄-alkyl are methyl, ethyl, propyl, isopropyl, n-butyl, isobutyl, sec-butyl and tert-butyl. C₁₋₆-alkyl are C₁₋₄-alkyl, n-pentyl, isopentyl and n-hexyl. Examples of C₁₋₁₀-alkyl are C₁₋₆-alkyl and n-heptyl, n-octyl, 2-ethylhexyl, 1,1-dimethyl-3,3-dimethylbutyl, n-nonyl and decyl. Examples of C₁₋₃₀-alkyl are C₁₋₁₀-alkyl, neodecyl, n-undecyl and n-dodecyl C₁₋₁₂-alkyl, tridecyl, tetradecyl, pentadecyl, hexadecyl, heptadecyl, octadecyl, nonadecyl and eicosyl.

Examples of C₆₋₁₄-aryl are phenyl, 1-naphthyl and 2-naphthyl.

An example of C₇₋₃₀-aralkyl is benzyl.

Examples of linear C₃₋₃₀-alkylene are propylene, butylene, pentylene, hexylene, heptylene, octylene, nonylene, decylene, undecylene and dodecylene. Examples of linear C₅₋₂₀-alkylene are pentylene, hexylene, heptylene, octylene, nonylene, decylene, undecylene and dodecylene.

Examples of linear unsubstituted C₅₋₂₀-alkylene and of linear unsubstituted C₃₋₃₀-alkylene, wherein at least one CH₂ group is replaced by O are 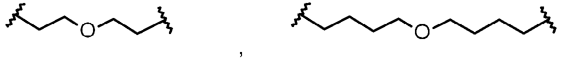 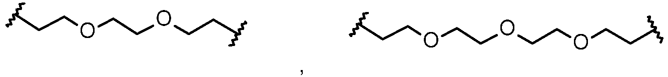 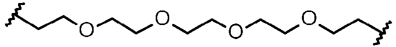 and

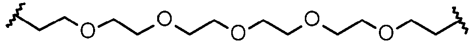

Examples of halide anions are fluoride, chloride, bromide and iodide.

Examples of halogen are fluorine, chlorine, bromine and iodine.

In the catalyst of formula (I) (R^{1a})²⁻ is preferably a dianion of formula 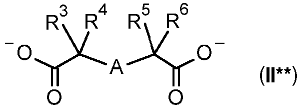 wherein
at least two, more preferably at least three of R³, R⁴, R⁵ or R⁶, most preferably each of R³, R⁴, R⁵ and R⁶ is unsubstituted or at least monosubstituted C₆₋₁₄-aryl, wherein the substituents are selected from the group consisting of -OH, halogen, -C(=O)-OM¹, -CF₃, -NH₂, -NH-C₁₋₃₀-alkyl, - NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, - N(phenyl)₂, -SH, -S-C₁₋₆-alkyl, -S-phenyl, -O-C₁₋₆-alkyl or -O-phenyl, wherein M² is H or metal, and
wherein one to ten CH₂ groups of C₃₋₃₀-alkylene may be replaced by a heteroatom independently selected from the group consisting of O and S, preferably by O.
(R^{1a})²⁻ is more preferably a dianion of formula 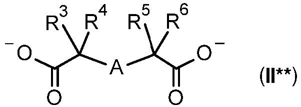
wherein at least one, preferably at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, - N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, - O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, - N(phenyl)₂, -SH, -S-C₁₋₆-alkyl, -S-phenyl, -O-C₁₋₆-alkyl or -O-phenyl, wherein M² is H or metal, and
wherein one, two, three, four, five or six CH₂ groups of C₃₋₃₀-alkylene may be replaced by a heteroatom independently selected from the group consisting of O and S, preferably by O.
(R^{1a})²⁻ is even more preferably a dianion of formula 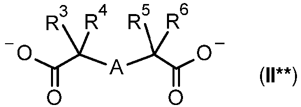
wherein
at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -NH-C₁₋₃₀-alkyl, -N(C₁₋₃₀-alkyl)₂, -S-C₁₋₃₀-alkyl, -O-C₁₋₃₀-alkyl and C₁₋₃₀-alkyl, and the alkyl fragments of these substituents may in turn be at least monosubstituted by -NH-C₁₋₆-alkyl, -N(C₁₋₆-alkyl)₂, -S-C₁₋₆-alkyl or -O-C₁₋₆-alkyl
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, wherein M² is H or metal, and
wherein one, two, three, four, five or six CH₂ groups of C₃₋₃₀-alkylene maybe replaced by a heteroatom independently selected from the group consisting of O and S, preferably by O.
(R^{1a})²⁻ is most preferably a dianion of formula 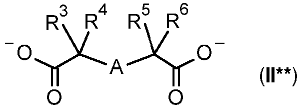
wherein
at least one, preferably at least two, more preferably at least three of R³, R⁴, R⁵ or R⁶ is phenyl, and most preferably each of R³, R⁴, R⁵ and R⁶ is phenyl
   and
A is unsubstituted linear C₅₋₂₀-alkylene, wherein one or two, three, four or five CH₂ groups of C₅₋₂₀-alkylene are replaced by a heteroatom independently selected from the group consisting of O and S, preferably by O.
(R^{1a})²⁻ is in particular selected from the group consisting of 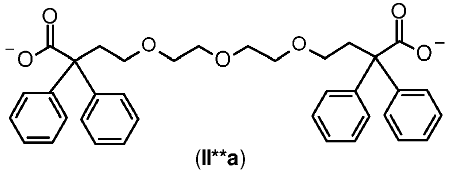 and

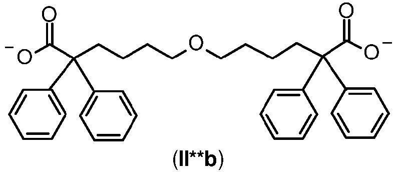

In the catalyst of formula (I) (R^{1b})⁻ is preferably an anion of formula 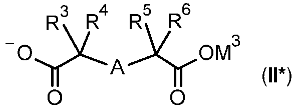 wherein
at least two, more preferably at least three of R³, R⁴, R⁵ or R⁶, most preferably each of R³, R⁴, R⁵ and R⁶ is unsubstituted or at least monosubstituted C₆₋₁₄-aryl, wherein the substituents are selected from the group consisting of -OH, halogen, -C(=O)-OM¹, -CF₃, -NH₂, -NH-C₁₋₃₀-alkyl, - NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, - N(phenyl)₂, -SH, -S-C₁₋₆-alkyl, -S-phenyl, -O-C₁₋₆-alkyl or -O-phenyl, wherein M² is H or metal, and
wherein one to ten CH₂ groups of C₃₋₃₀-alkylene may be replaced by a heteroatom independently selected from the group consisting of O and S, preferably by O,
and M³ is H or metal.
(R^{1b})⁻ is more preferably an anion of formula 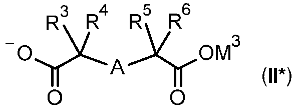
wherein at least one, preferably at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, - N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, - O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, - N(phenyl)₂, -SH, -S-C₁₋₆-alkyl, -S-phenyl, -O-C₁₋₆-alkyl or -O-phenyl, wherein M² is H or metal, and
wherein one, two, three, four, five or six CH₂ groups of C₃₋₃₀-alkylene may be replaced by a heteroatom independently selected from the group consisting of O and S, preferably by O,
and M³ is H or metal,
(R^{1b})⁻ is even more preferably an anion of formula 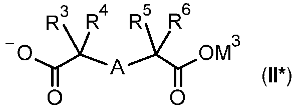
wherein
at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -NH-C₁₋₃₀-alkyl, -N(C₁₋₃₀-alkyl)₂, -S-C₁₋₃₀-alkyl, -O-C₁₋₃₀-alkyl and C₁₋₃₀-alkyl, and the alkyl fragments of these substituents may in turn be at least monosubstituted by -NH-C₁₋₆-alkyl, -N(C₁₋₆-alkyl)₂, -S-C₁₋₆-alkyl or -O-C₁₋₆-alkyl
   and
A is unsubstituted or at least monosubstituted linear C₃₋₃₀-alkylene, wherein the substituents are selected from the group consisting of -OH, halogen,-C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, wherein M² is H or metal, and
wherein one, two, three, four, five or six CH₂ groups of C₃₋₃₀-alkylene maybe replaced by a heteroatom independently selected from the group consisting of O and S, preferably by O,
and M³ is H or metal.
(R^{1b})⁻ is most preferably an anion of formula 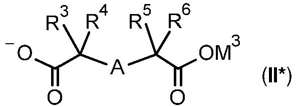
wherein
at least one, preferably at least two, more preferably at least three of R³, R⁴, R⁵ or R⁶ is phenyl, and most preferably each of R³, R⁴, R⁵ and R⁶ is phenyl
   and
A is unsubstituted linear C₅₋₂₀-alkylene, wherein one or two, three, four or five CH₂ groups of C₅₋₂₀-alkylene are replaced by a heteroatom independently selected from the group consisting of O and S, preferably by O,
and M³ is H or metal.
(R^{1b})⁻ is in particular selected from the group consisting of 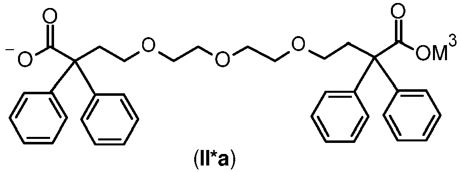 and 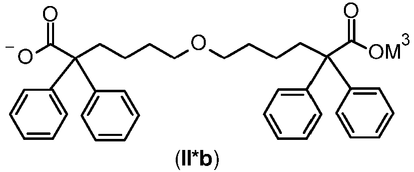
and M³ is H or metal.

In the catalyst of formula (I) (R²)⁻ is preferably at each occurrence selected from the group consisting of R⁸-O⁻ and an anion of formula 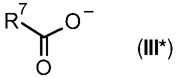 wherein
R⁷ and R⁸ are independently an organic residue, with the proviso that the anion of formula **(III*)** is different from the anion of formula **(II*).**
(R²)⁻ is more preferably at each occurrence selected from the group consisting of R⁸-O⁻ and an anion of formula 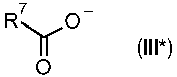
wherein
R⁷ and R⁸ are independently and at each occurence unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM⁴, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -C(=O)-OM³, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl, O-phenyl or C₁₋₆-alkyl, wherein M⁴ is H or metal,
wherein at least one CH₂ group, preferably one to ten CH₂ groups, more preferably one, two, three, four, five or six CH₂ groups, of C₁₋₃₀-alkyl may be replaced by a heteroatom independently selected from the group consisting of O, S, NH, N-C₁₋₃₀-alkyl, N-C₆₋₁₄-aryl and N-C₇₋₃₀-aralkyl, wherein alkyl and aryl fragments of N-C₁₋₃₀-alkyl, N-C₆₋₁₄-aryl, N-C₇₋₃₀-aralkyl may at least be monosubstituted by -OH halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, preferably by O,
with the proviso that the anion of formula **(III*)** is different from the anion of formula **(II*).**

Examples of (R²)⁻ are anions of formula R⁸-O⁻ such as ethoxide, n-propoxide, iso-propoxide, n-butoxide, iso-butoxide, tert-butoxide and pentoxide, as well as anions of formula **(III*)** such as n-propionate, isopropionate, n-butanoate, isobutanoate, sec-butanoate, tert-butanoate, n-pentanoate, neopentanoate, n-hexanoate, n-heptanoate, n-octanoate, 2-ethyl-hexanoate, n-decanoate and neodecanoate
(R²)⁻ is even more preferably at each occurrence selected from the group consisting of R⁸-O⁻ and an anion of formula 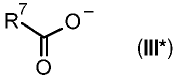
wherein R⁷ and R⁸ are independently and at each occurence unsubstituted or at least monosubstituted C₁₋₃₀-alkyl, wherein the substituent can be C₆₋₁₄-aryl, which in turn can be at least monosubstituted by -OH, halogen, -CF₃, NH₂, -NH-C₁₋₆-alkyl, -NH-phenyl, -N(C₁₋₆-alkyl)₂, - N(phenyl)₂, -SH, -S-C₁₋₆-alkyl, -S-phenyl, -O-C₁₋₆-alkyl or -O-phenyl and C₁₋₆-alkyl,
   and
wherein one, two, three, four, five or six CH₂ groups of C₁₋₃₀-alkyl may be replaced by a heteroatom independently selected from the group consisting of O and S, preferably by O.
(R²)⁻ is most preferably R⁸-O⁻, wherein R⁸ is unsubstituted or at least monosubstituted C₁₋₁₀-alkyl.
(R²)⁻ is in particular isopropoxide.
M¹ is preferably selected from the group consisting of H, lithium, sodium and potassium. M² is preferably selected from the group consisting of H, lithium, sodium and potassium. M³ is preferably selected from the group consisting of H, lithium, sodium and potassium.
(M^{a})⁴⁺ is a tetravalent metal. Preferably, (M^{a})⁴⁺ is a tetravalent metal selected from the group consisting of Zr⁴⁺, Pb⁴+, Ti⁴+, Sn⁴⁺ and Hf⁴⁺. More preferably, (M^{a})⁴⁺ is a tetravalent metal selected from the group consisting of Zr⁴⁺, Ti⁴⁺, Sn⁴⁺ and Hf⁴⁺. Most preferably (M^{a})⁴⁺ is Zr⁴⁺.

Any combination of x, y and z is possible as long as the following conditions are fulfilled:
x is 0, 1 or 2,
y is 0, 1, 2, 3 or 4,
z is 0,1, 2 or 3
with the proviso that the sum of 2x + y + z = 4.

In one embodiment x is 1, y is 0 and z is 2, in other embodiments
x is 1, y is 2 and z is 0,
x is 1, y is 1 and z is 1,
x is 2, y is 0 and z is 0,
x is 0 y is 3 and z is 1, or
x is 0, y is 4 and z is 0.

Preferably x is 1 or 2,
y is 0, 1 or 2, and
z is 0, 1 or 2
with the proviso that the sum of 2x + y + z = 4.

More preferably x is 1,
y is 0, 1 or 2, and
z is 0, 1 or 2,
with the proviso that the sum of 2x + y + z = 4.

Most preferably x is 1,
y is 0, and
z is 2.

The catalyst of formula

((R^{1a})²⁻)ₓ((R^{1b})⁻)_{y}((R²)⁻)_{z}(M^{a})⁴⁺ **(I)**

wherein
(R^{1a})²⁻ is a dianion of formula 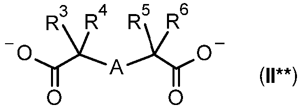 wherein
R³, R⁴, R⁵ and R⁶ are mutually independently an unsubstituted or at least monosubstituted C_{1- 30}-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal
   and
A is unsubstituted or at least monosubstituted linear C₃₋₃₀-alkylene, wherein the substituents are selected from the group consisting of -OH, halogen, -C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, - S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇-₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
(R^{1b})⁻ is an anion of formula 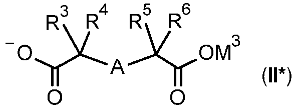
R³, R⁴, R⁵ and R⁶ are mutually independently an unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
   and
A is unsubstituted or at least monosubstituted linear C₃₋₃₀-alkylene, wherein the substituents are selected from the group consisting of -OH, halogen, -C(=O)-OM², -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, - S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇₋₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
M³ is H or metal,
   and
(R²)⁻ is HO⁻, R⁸-O , halide anion, HO-C(=O)-O⁻, R⁹-S⁻, or an anion of formula 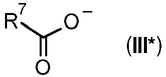
wherein
R⁷, R⁸ and R⁹ are an organic residue, with the proviso that the anion of formula (III*) is different from the anion of formula (II*),
(M^{a})⁴⁺ is a tetravalent metal,
x is 0, 1 or 2,
y is 0, 1, 2, 3 or 4,
z is 0,1, 2 or 3
with the proviso that the sum of 2x + y + z = 4,
is preferably obtainable by a process comprising the step of reacting a compound of formula

   ((R²)⁻)₄(M^{a})⁴⁺(R²H) **(VI)**
wherein
(R²)⁻ and (M^{a})⁴⁺ are as defined for the catalyst of formula **(1),** and
R² is the radical of the anion (R²)⁻
with at least one compound of a formula 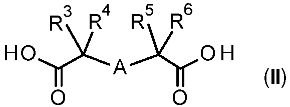
wherein R³, R⁴, R⁵ und R⁶ are as defined for the catalyst of formula **(1),** or a corresponding salt thereof.

The step of reacting a compound of formula **(VI)** with a compound of formula **(II)** is usually performed in at least one organic solvent. Examples of organic solvents suitable for reaction a) are aromatic hydrocarbons and ethers.

Examples of aromatic hydrocarbons are toluene, xylene, mesitylene and benzene.

Examples of ethers are dioxane, tetrahydrofuran, ethylene glycol monomethyl ether, ethylene glycol monoethyl ether, ethylene glycol monopropyl ether, ethylene glycol monobutyl ether, ethylene glycol dimethyl ether, ethylene glycol diethyl ether, ethylene glycol dipropyl ether, propylene glycol monomethyl ether, propylene glycol monoethyl ether, propylene glycol monopropyl ether, propylene glycol monobutyl ether, propylene glycol dimethyl ether, propylene glycol diethyl ether, propylene glycol dipropyl ether, diethylene glycol monomethyl ether, diethylene glycol monoethyl ether, diethylene glycol dimethyl ether, diethylene glycol diethyl ether.

The organic solvent is preferably selected from the group consisting of tetrahydrofuran and toluene.

The step of reacting a compound of formula **(VI)** with a compound of formula **(II)** is usually performed in the absence of water.

The step of reacting a compound of formula **(VI)** with a compound of formula **(II)** is usually performed at ambient temperatures, preferably at tempertatures in the range of 10 to 80 °C, more preferably at temperatures in the range of 15 to 35 °C.

(R²)⁻ is preferably R⁸-O⁻, wherein R⁸ is an organic residue.

The molar ratio of compound of formula **(II)/** compound of formula **(VI)** is usually in the range of 0.5/1.0 to 4.5/1.0, preferably in the range of 0.8/1.0 to 2.2/1.0, more preferably in the range of 0.8/1.0 to 1.2/1.0.

After the step of reacting the compound of formula **(VI)** with a compound of formula **(II)** the catalyst of formula **(I)** is usually obtained by removing volatiles, for example by distillation, and optionally further recrystallization.

The catalyst of formula **(I)** can also be prepared *in-situ* by performing the step of reacting a compound of formula **(VI)** with a compound of formula **(II)** in the process of the present invention for the preparation of polyester polyols.

The compounds of formula 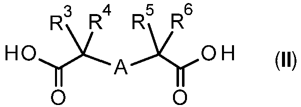 wherein R³, R⁴, R⁵ and R⁶ and A are as defined above, can be prepared by methods known in the art.

The compounds of formula 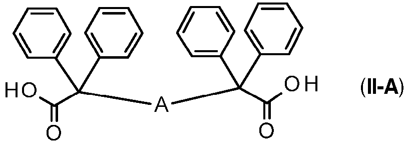 wherein A is as defined above, can, for example, be prepared by reacting compound of formula 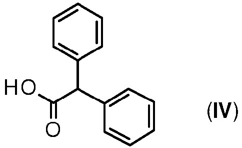 with a compound auf formula 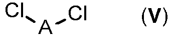 wherein A is as defined above.

Usually the compound of formula **(IV),** usually dissolved in an organic solvent such as tetrahydrofuran, is treated with a strong base such as n-butyl lithium at a temperature in the range of - 80 to 0 °C, preferably in the range of -20 to -10 °C, followed by slow addition of the compound of formula **(V)** at temperature in the range of -80 to 0 °C, preferably in the range of -60 to -30 °C. After addition of the compound of formula **(V)** the reaction mixture is usually allowed to warm to room temperature and stirred at room temperature for about 6 to 24 hours. The reaction can be terminated by addition of an acid such as HCl. The molar ratio of n-butyl lithium to compound of formula **(IV)** is usually in the range of 1.8/1.0 to 2.6/1.0. The molar ratio of compound of formula **(V)** to compound of formula **(IV)** is usually in the range of 0.3/1 to 0.7/1.0.

The compound, oligomer or polymer carrying at least one acidic group or a derivative thereof **(A1)** can be any compound, oligomer or polymer carrying at least one acidic group or a derivative thereof.

The compound, oligomer or polymer carrying at least one acidic group or a derivative thereof **(A1)** can also carry functional groups other than acidic groups such as ester, ether, urethane amide, OH, SH and NH₂ groups. The compound, oligomer or polymer carrying at least one acidic group or a derivative thereof **(A1)** preferably does not carry functional groups other than acidic groups.

The compound, oligomer or polymer carrying at least one acidic group or a derivative thereof **(A1)** can be aliphatic, not aromatic cyclic or aromatic.

The compound, oligomer or polymer carrying at least one acidic group or a derivative thereof **(A1)** can carry at least one ethylenically unsaturated group. If the compound, oligomer or polymer carrying at least one acidic group or a derivative thereof **(A1)** carries at least one ethylenically unsaturated group, the ethylenically unsaturated group is preferably selected from the group consisting of 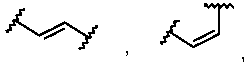 acryloyl and methacryloyl, more preferably the ethylenically unsaturated group is an acryloyl group.

Examples of acid groups are COOH, SO₂OH, O-PO₂OH and O-POOH.

Examples of derivatives thereof are (i) the corresponding anhydrides in monomeric or polymeric form, (ii) the corresponding mono- or di-C₁₋₄-alkyl-esters such as monomethyl ester, dimethyl ester, monoethylester, diethyl ester or mixed methyl ethyl esters, (iii) the corresponding amides, or (iv) the corresponding acid halides such as chlorides or bromides. Preferably, the derivative thereof is selected from the group consisting of the monomeric anhydride thereof and the mono- or di-C₁₋₄-alkyl-ester thereof.

Examples of compounds, oligomers or polymers carrying at least one acidic group or derivatives thereof **(A1)** are compounds, oligomers or polymers carrying one acidic group or derivatives thereof, compounds, oligomers or polymers carrying two acidic groups or derivatives thereof, compounds, oligomers or polymers carrying three acidic groups or derivatives thereof and compounds, oligomers or polymers carrying four acidic groups or a derivative thereof.

Examples of aliphatic compounds carrying one acidic group and at least one ethylenically unsaturated group are oleic acid, acrylic acid and methacrylic acid.

Examples of aliphatic compounds carrying two acidic groups are aliphatic C₂₋₂₀-diacids such as oxalic acid, malonic acid, succinic acid, glutaric acid, adipic acid, pimelinic acid, suberic acid, azelaic acid and sebacic acid, as well as 1,11-undecanedicarboxylic acid, 1,12-dodecanedicarboxlyic acid, maleic acid, fumaric acid, 2-methylmalonic acid, 2-ethylmalonic acid, 2-methylsuccinic acid, 2-ethylsuccinic acid, itaconic acid, 3,3-dimethylglutaric acid, glutamic acid, aspartic acid, tartaric acid and malic acid.

Examples of not aromatic compounds carrying two acidic groups are cyclopentane-1,2-dicarboxylic acid, cyclopentane-1,3-dicarboxylic acid, cyclohexane-1,2-dicarboxylic acid, cyclohexane-1,3-dicarboxylic acid, cyclohexane-1,4-dicarboxylic acid, cycloheptane-1,2-dicarboxylic acid, 1,2-bis(carboxymethyl)-cyclohexane, 1,3-bis(carboxymethyl)-cyclohexane and 1,4-bis(carboxymethyl)-cyclohexane.

Examples of aromatic compounds carrying two acidic groups are 2,4-furandicarboxylic acid, 2,5-furandicarboxylic acid (also called dehydromucic acid), phthalic acid, isophthalic acid, terephthalic acid and bis(4-carboxyphenyl) methane, 2-phenylsuccinic acid and 2-phenylmalonic acid.

An example of an aliphatic compound carrying three COOH groups is aconitic acid. An example of a not aromatic cyclic compound carrying three COOH groups is 1,3,5-cyclohexanetricarboxylic acid. Examples of aromatic compounds carrying three COOH groups are 1,2,4-benzenetricarbocxylic acid and 1,3,5-benzenetricarbocxylic acid.

Examples of aliphatic compounds carrying four COOH groups are ethylene diamine tetraacetic acid and ethylene diamine disuccinate. An example of an aromatic compound carrying four COOH groups is 1,2,4,5-benzenetetracarboxylic acid. An example of a derivative of an aromatic compound carrying four COOH groups is pyromellitic dianhydride.

Preferably, the compound, oligomer or polymer carrying at least one acidic group or a derivative thereof **(A1)** is an aliphatic or not aromatic compound or oligomer carrying at least one acidic group or a derivative thereof. More preferably, the compound, oligomer or polymer carrying at least one acidic group or a derivative thereof **(A1)** is an aliphatic compound carrying one or two COOH groups or a derivative thereof. Even more preferably, the compound, oligomer or polymer carrying at least one acidic group or a derivative thereof **(A1)** is an aliphatic compound carrying two COOH groups or a derivative thereof. Most preferably, the compound, oligomer or polymer carrying at least one acidic group or a derivative thereof **(A1)** is an aliphatic C₂₋₁₀-diacid or a derivative thereof. In particular, the compound, oligomer or polymer carrying at least one acidic group or a derivative thereof **(A1)** is adipic acid.

The polyol not carrying an acidic group **(B1)** can be any polyol not carrying an acidic group.

The polyol not carrying an acidic group **(B1)** can also carry functional groups other than OH groups such as ester, ether, urethane, amide, SH and NH₂ groups. Preferably, the polyol not carrying acidic groups (B1) does not carry functional groups other than OH groups.

The polyol not carrying an acidic group **(B1)** can be a monomer, an oligomer or polymer.

The polyol not carrying an acidic group **(B1)** can be aliphatic, not aromatic cyclic or aromatic.

The polyol not carrying an acidic group **(B1)** can carry at least one ethylenically unsaturated group. If the polyol not carrying an acidic group **(B1)** carries at least one ethylenically unsaturated group, the ethylenically unsaturated group is preferably an acryloyl or methacryloyl group, more preferably an acryloyl group.

Examples of polyols not carrying an acidic group **(B1)** are diols not carrying an acidic group, triols not carrying an acidic group, tetraols not carrying an acidic group, pentaols not carrying an acidic group and hexaols not carrying an acidic group.

Examples of aliphatic monomeric diols not carrying a acidic group are aliphatic monomeric C₁₋₁₂-diols not carrying an acidic group such as ethylene glycol, propane-1,2-diol, propane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol, heptane-1,7-diol, octane-1,8-diol, octane-1,2-diol, nonane-1,9-diol, decane-1,2-diol, decane-1,10-diol, dodecane-1,2-diol, dodecane-1,12-diol, hexa-1,5-diene-3,4-diol, neopentyl glycol, 2-methyl-pentane-2,4-diol, 2,4-dimethyl-pentane-2,4-diol, 2-ethyl-hexane-1,3-diol, 2,5-dimethyl-hexane-2,5-diol, 2,2,4-trimethyl-pentane-1,3-diol, pinacol and hydroxypivalinic acid neopentyl glycol ester.

Examples of not aromatic cyclic monomeric diols not carrying an acidic group are 2,2,4,4-tetramethyl-1,3-cyclobutandiol, cyclopentane-1,2-diol, cyclopentane-1,3-diol, 1,2-bis(hydroxymethyl) cyclopentane, 1,3-bis(hydroxymethyl) cyclopentane, 1,4-bis(hydroxymethyl)-cyclohexane and 1,4-bis(hydroxyethyl)-cyclohexane, cyclohexane-1,2-diol, cyclohexane-1,3-diol, cyclohexane-1,4-diol, cycloheptane-1,3-diol, cycloheptane-1,4-diol, cycloheptane-1,2-diol and tetrahydrofuran-2,5-dimethanol.

Examples of aliphatic oligomeric or polymeric diols not carrying an acidic group are diethylene glycol, triethylene glycol, dipropylene glycol, tripropylene glycol, polyethylene glycols HO(CH₂CH₂O)ₙ-H, polypropylene glycols HO(CH(CH₃)-CH₂-O)ₙ-H, n being an integer and n >= 4, polyethylene-polypropylene glycols, the sequence of the ethylene oxide or propylene oxide units being blockwise or random, polytetramethyleneglycols,polytetrahydrofurane, and polycaproplactone.

Examples of aliphatic triols are glycerol, trimethylolmethane, 1,1,1-trimethylolethane, 1,1,1-trimethylolpropane and 1,2,4-butanetriol, as well as ethoxylated, propoxylated and/or butoxylated derivatives thereof.

Further examples of aliphatic polyols not carrying an acidic group are pentaerythritol, diglycerol, triglycerole, tetraglycerol, di(trimethylolpropane) and di(pentaerythritol), as well as ethoxylated, propoxylated and/or butoxylated derivatives thereof.

Example of not aromatic cyclic triol are 1,3,5-tris(hydroxymethyl)isocyanurate, 1,3,5-tris(2-hydroxyethyl)isocyanurate, 1,3,5-tris(2-hydroxyisopropyl)isocyanurate, 1,3,5-tris(2-hydroxypropyl)isocyanurate and 1,3,5-tris(2-hydroxybutyl)isocyanurate.

Further examples of not aromatic cyclic polyols not carrying an acidic groups are inositol, sugars such as glucose, fructose and sucrose, sugar alcohols such as sorbitol, mannitol, threitol, erythritol, adonitol (ribitol), arabitol (lyxitol), xylitol, dulcitol (galactitol), malitol and isomalt, as well as tris(hydroxymethyl)amine, tris(hydroxyethyl)amine and tris(hydroxypropyl)amine.

Preferably, the polyol not carrying an acidic group **(B1)** is an aliphatic or not aromatic cyclic polyol not carrying an acidic group. More preferably, the polyol not carrying an acidic group **(B1)** is an aliphatic polyol not carrying an acidic group. Even more preferably, the polyol not carrying an acidic group **(B1)** is an aliphatic monomeric diol not carrying an acidic group. Most preferably, the polyol not carrying an acidic group **(B1)** is a C₂₋₁₂ diol not carrying an acidic group.

The monoalcohol not carrying an acidic group **(B2)** can be any monoalcohol not carrying an acidic group.

The monoalcohol not carrying an acidic group **(B2)** can also carry functional groups other than OH groups such as ester, ether, urethane, amide, SH and NH₂ groups.

The monoalcohol not carrying an acidic group **(B2)** can be a monomer, an oligomer or polymer.

The monoalcohol not carrying an acidic group **(B2)** can be aliphatic, not aromatic cyclic or aromatic.

The monoalcohol not carrying an acidic group **(B2)** can carry at least one ethylenically unsaturated group. If the monoalcohol not carrying an acidic group **(B2)** carries at least one ethylenically unsaturated group, the ethylenically unsaturated group is preferably an acryloyl or methacryloyl group, more preferably an acryloyl group.

Examples of monoalcohols not carrying an acidic group **(B2)** are 2-hydroxyethyl acrylate, 2-hydroxyethyl methacrylate, 3-hydroxy-propylacrylate and 4-hydroxybutylacrylate.

The compound, oligomer or polymer carrying at least one acidic group or a derivative thereof **(A1),** polyol **(B1)** and monoalcohol **(B2)** can be derived from fossil or from renewable resources such as plants. Whether the components are derived from renewable resources or not can be determined by the C-14/C-12 isotope ratio.

The step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** the presence of a catalyst of formula **(I)** can be carried out in the presence of an organic solvent. Examples of suitable solvents include hydrocarbons such as n-heptane, cyclohexene, toluene, ortho-xylene, meta-xylene, para-xylene, xylene isomer mixture, ethylbenzene, chlorobenzene, ortho- and meta-dichlorobenzene. Of further suitability as solvents in the absence of acidic catalysts are ethers such as dioxane or tetrahydrofuran, and ketones such as methyl ethyl ketone and methyl isobutyl ketone.

Preferably, the step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** the presence of a catalyst of formula **(I)** is carried out in the absence of solvent.

The water formed in the course of the step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** the presence of a catalyst of formula **(I)** is preferably continously removed. Water can be removed by distillation. Water can also be removed by stripping, which comprises passing a gas, which is inert under the reaction conditions, such as nitrogen, through the reaction mixture. Water can also be removed by performing the reaction in the presence of a water-removing agent such as MgSO₄ and Na₂SO₄. It is also possible to combine various methods for the removal of water. Preferably, water is removed by distillation, optionally in combination with at least one other method for removal of water.

The step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** the presence of a catalyst of formula **(I)** is usually performed at a pressure in the range of 1 mbar to 2000 mbar, preferably at a pressure in the range of 1 to 1100 mbar, more preferably at a pressure in the range of 1 to 800 mbar.

The temperature is usually in the range of 90 to 260 °C, preferably, in the range of 150 to 260 °C and more preferably in the range of 180 to 250 °C, and most preferably in the range of 190 to 240 °C.

The equivalent ratio of OH groups of B1 and B2 to acidic groups of A1 is preferably in the range of 0.8/1.0 to 2.4/1.0, more preferably in the range of 0.8/1.0 to 1.2/1.0, most preferably in the range of 0.9/1.0 to 1.1/1.0.

If an excess of OH groups of B1 and B2 to acidic groups of A1 is used in the process of the present invention, unreacted B1 and B2 can be, and preferably is, removed at the end of the reaction, for example by distillation.

The catalyst of formula **(I)** is usually used in an amount of 0.1 to 1000 ppm (M^{a})⁴⁺ based on the weight of A1, B1 and B2. The amount of catalyst of formula (I) is preferably 0.5 to 500 ppm (M^{a})⁴⁺ based on the weight of A1, B1 and B2, more preferably 1 to 250 ppm (M^{a})⁴⁺ based on the weight of A1, B1 and B2, and most preferably 1.5 to 100 ppm (M^{a})⁴⁺ based on the weight of A1, B1 and B2.

The step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** the presence of a catalyst of formula **(I)** can be monitored by the titration of the acid number or hydroxyl number.

Usually, the reaction is stopped, when the target acid number or hydroxyl number of the polyester polyol is reached, by cooling the reaction mixture, preferably to below 90 °C. The reaction mixture can then be optionally diluted with an organic solvent to yield a solution of the polyester polyol in an organic solvent.

The polyester polyol can also be isolated, if desired, from the solution of the polyester polyol in the organic solvent, for example, by the addition of water and filtering off the precipitated polyester polyol.

Also part of the process of the present invention is a polyester polyol obtainable by the process of the present invention.

The polyester polyols can also be hyperbranched polyester polyols.

The polyester polyol of the present invention preferably has a number-average molecular weight Mn in the range of 500 to 50000 g/mol, more preferably in the range of 1000 to 25000 g/mol, even more preferably in the range of 5000 to 20000 g/mol.

The polyester polyol of the present invention preferably has a weight-average molecular weight Mw in the range of 500 to 200000 g/mol, more preferably, in the range of 10000 to 100000 g/mol, even more preferably in the range of 15000 to 70000 g/mol.

The weight-average and the number-average molecular weight of the polyester polyol is preferably determined by gel permeation chromatography using dimethyl acetamide as eluent and calibrated to a poly(methylmethacrylate)standard.

The polyester polyol obtainable by the process of the present invention has preferably a viscosity at 25 °C in the range of 500 to 80000 mPas, more preferably in the range of 8000 to 60000 mPas.

The viscosity of the polyester polyol can be determined at 25 °C according to DIN EN ISO 3219 (1994) with a rotational viscosimeter Rheotec RC 20, using spindle CC 25 DIN (diameter of spindle: 12.5 mm; interior diameter of measuring cylinder: 13.56 mm) at a shear rate of 50 s⁻¹.

The polyester polyol obtainable by the process of the present invention as well as a solution of the polyester polyol in at least one organic solvent have various applications.

Polyester polyols can be used for food-contact applications such as polyster polyol films and plastic water bottles as well as in UV-curable varnish applications.

The polyester polyol can also be used as component for the preparation of polyurethanes. Polyurethanes can be used, for example, as binders in coating compositions such as ink or paint compositions, as binders in adhesive compositions, as foams, for example as flexible foams in seating applications and for mattresses and pillows, as rigid foams for insulation applications and as microcellular foams for footwear, or as elastomer, for example as compact elastomers for resin casting.

Also part of the invention is the use of the polyester polyol obtainable by the process of the present invention for the preparation of polyurethane.

The process of the present invention for the preparation of a polyester polyol is advantageous in that the process has a shorter reaction time than analogous processes using dibutyltin dilaurate or Zr-(IV)-butoxide instead of the catalyst of formula **(I).** In addition, the catalyst of formula **(I)** is less toxic than dibutyltin dilaurate.

### Examples

### Determination of viscosity

The viscosity of the polyols was determined at 25 °C according to DIN EN ISO 3219 (1994) with a rotational viscosimeter Rheotec RC 20, using spindle CC 25 DIN (diameter of spindle: 12.5 mm; interior diameter of measuring cylinder: 13.56 mm) at a shear rate of 50 s⁻¹.

### Determination of the acid number

The acid number was determined according to DIN EN 1241 (1998-05).

### Determination of weight average molecular weight Mw and number average molecular weight Mn

The weight average and the number average molecular weight was determined by gel permeation chromatography (GPC) using dimethyl acetamide as eluent with a flow rate of 0.7 mL/min. The GPC was equipped with a HPLC pump and an RI detector from Knauer and 4 x 60cm Phenogel 5My 1000/10000/10000/1000 Angström columns from Phenomenex. Obtained raw data were treated with a poly(methyl-methacrylate) (PMMA) calibration.

### Example 1a

### Preparation of the compound of formula IIa

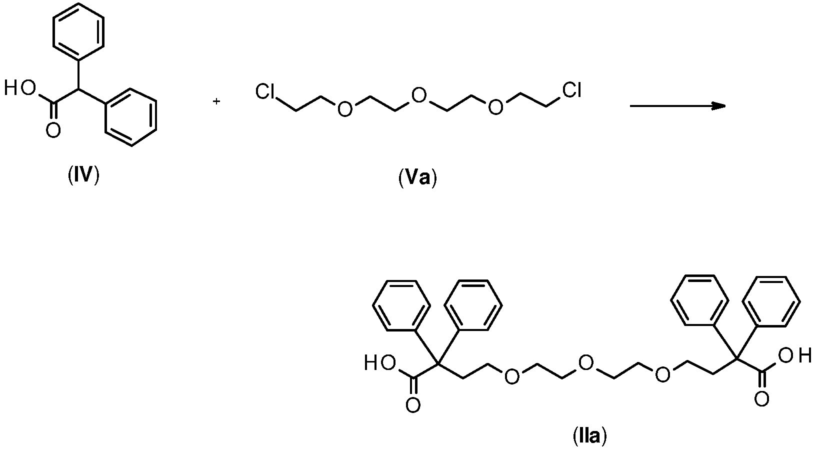

In a Schlenk flask, 2,2-diphenylacetic acid **(IV)** (50.0 g, 235.57 mmol, 1.00 eq.) was dissolved in 156 mL THF and cooled to -15 °C. Then, a 2.5 M solution of n-butyllithium in n-hexane (210 mL, 525 mmol, 2.20 eq.) was slowly added and the resulting red solution was stirred for 45 min at this temperature. Subsequently, the reaction solution was cooled to -45 °C and the compound of formula **(Va)** (23.10 mL, 117.79 mmol, 0.50 eq.) was slowly added. The mixture was then stirred overnight at room temperature and terminated by the addition of a 1.0 M aqueous solution of HCl. Subsequently, the phases were separated in a separatory funnel and the aqueous phase was extracted with Et₂O (3 x 50 mL). Afterwards, the collected organic phases were washed with water, dried over MgSO₄ and decanted. Crystallization at - 27 °C gives compound **IIa** as a white solid. Yield: 89% (61.2 g, 105.00 mmol). ¹H-NMR

(400.03 MHz, CDCl₃): δ = 7.37 (m, 8H, aryl-H), 7.25 (m, 12H, aryl-H), 3.75 (m, 4H, CH₂), 3.48 (m, 4H, CH₂), 3.23 (t, 4H, CH₂), 2.71 (t, 4H, CH₂).

### Example 1b

### Preparation of the compound of formula IIb

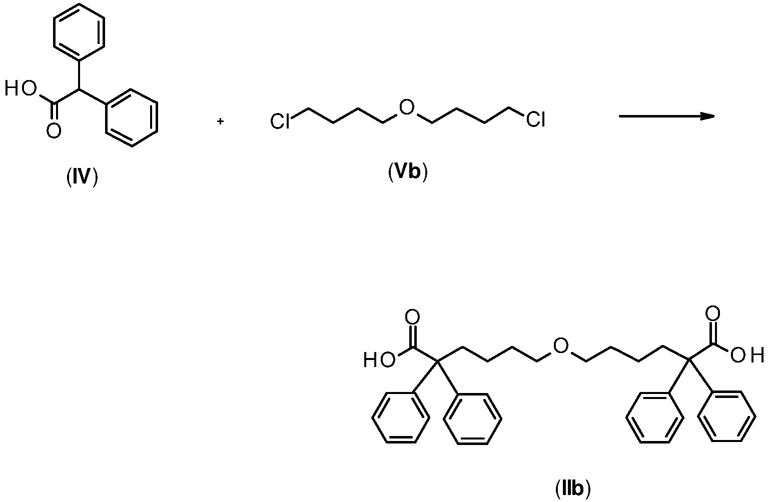

In a Schlenk flask, 2,2-diphenylacetic acid **(IV)** (50.0 g, 235.57 mmol, 1.00 eq.) was dissolved in 156 mL THF and cooled to -15 °C. Then, a 2.5 M solution of n-butyllithium in n-hexane (210 mL, 525 mmol, 2.20 eq.) was slowly added and the resulting red solution was stirred for 45 min at this temperature. Subsequently, the reaction solution was cooled to -45 °C and compound **(Vb)** (21.70 mL,117.79 mmol, 0.50 eq.) was slowly added. The mixture was then stirred overnight at room temperature and terminated by the addition of a 1.0 M aqueous solution of HCl. Subsequently, the phases were separated in a separatory funnel and the aqueous phase was extracted with Et₂O (3 x 50 mL). Afterwards, the collected organic phases were washed with water, dried over MgSO₄ and decanted. Crystallization at - 27 °C gave **IIb** as white solid. Yield: 75% (45.70 g, 84.50 mmol). ¹H-NMR (400.03 MHz, CDCl₃): ¹H-NMR (400.03 MHz, CDCl₃): δ = 7.20 (m, 20H, aryl-H), 3.23 (t, 4H, CH2), 2.30 (m, 4H, CH2), 1.44 (m, 4H, CH2), 1.15 (m, 4H, CH2).

### Example 2a

### Preparation of catalyst Ia

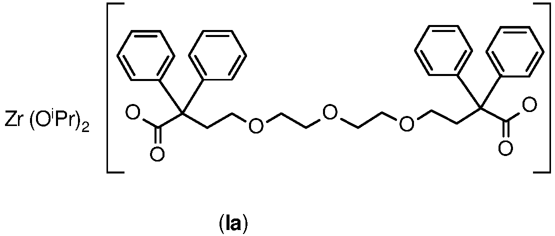

A Schlenk flask was charged with Zr(OⁱPr)₄(HOⁱPr) (1.00 eq.) and compound **IIa** (1.00 eq.) prepared as described in example 1a. Anhydrous toluene or tetrahydrofuran (6 mL per mmol of Zr(OⁱPr)₄(HOⁱPr)) was added slowly at room temperature and the reaction mixture was stirred for 6 hour. Subsequently, all volatiles were removed under reduced pressure and the residue was dried *in vacuo* at 80 °C overnight to afford catalyst **Ia** as an off-white solid. ¹H-NMR (400.03 MHz, (CD₃)₂SO): *δ* = 7.29 (m, 8H, aryl-H), 7.22 (m, 12H, aryl-H), 3.80 (sept, 2H, CH), 3.36 (m, 4H, CH₂), 3.29 (m, 4H, CH₂), 3.09 (m, 4H, CH₂), 2.54 (m, 4H, CH₂), 1.04 (d, 12H, CH₂).

### Example 2b

### Preparation of catalyst Ib

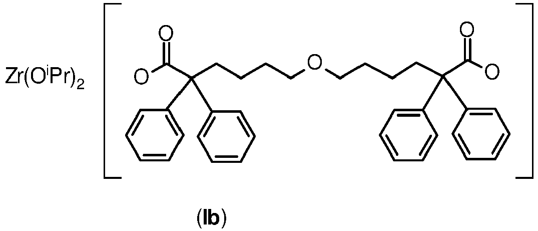

A Schlenk flask was charged with Zr(OⁱPr)₄(HOⁱPr) (1.00 eq.) and compound **IIb** (1.00 eq.) prepared as described in example 1b. Anhydrous toluene or tetrahydrofuran (6 mL per mmol of Zr(OⁱPr)₄(HOⁱPr)) was added slowly at room temperature and the reaction mixture was stirred for 6 hour. Subsequently, all volatiles were removed under reduced pressure and the residue was dried *in vacuo* at 80 °C overnight to afford catalyst **Ib** as an off-white solid. ¹H-NMR (400.03 MHz, (CD₃)₂SO): δ = 7.27 (m, 20H, aryl-H), 3.79 (sept, 2H, CH), 3.38 (m, 8H, CH₂), 2.24 (m, 4H, CH₂), 2.20 (m, 4H, CH₂), 1.04 (d, 12H, CH₂).

### Comparative example 1

### Preparation of a polyester polyol using dibutyltin dilaurate (DBTL) (in an amount of 37.4 ppm Sn based on the weight of component mixture C1) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and dibutyltin dilaurate (74 mg, 0.15 mmol) was heated under nitrogen to 200°C. Starting from 110 °C a vacuum of 600 mbar was applied. After 1 hour at 200 °C, the vacuum was lowered to 400 mbar. After 1 hour at 400 mbar and 200°C, the vacuum was lowered to 200 mbar. Water was continuously distilled off. The viscosity and the acid number were determined at the times outlined in table 1. The weight-average molecular weight Mw and the number-average molecular weight Mn were determined at the times outlined in table 2.

### Comparative example 2

### Preparation of a polyester polyol using Zr-(IV) butoxide (in an amount of 37.4 ppm Zr based on the weight of component mixture C1) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and Zr-(IV) butoxide solution (80% Zr-(IV)-butoxide in 1-butanol) (72.7 mg, 0.15 mmol) was heated under nitrogen to 200°C. Starting from 110 °C a vacuum of 600 mbar was applied. After 1 hour at 200 °C, the vacuum was lowered to 400 mbar. After 1 hour at 400 mbar and 200°C, the vacuum was lowered to 200 mbar. Water was continuously distilled off. The viscosity and the acid number were determined at the times outlined in table 1. The weight-average molecular weight Mw and the number average molecular weight Mn were determined at the times outlined in table 2.

### Example 3a

### Preparation of a polyester polyol using catalyst Ia (in an amount of 37.4 ppm Zr based on the weight of component mixture C1) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and
Catalyst **Ia** (120 mg, 0.15 mmol) prepared as described in example 2a was heated under nitrogen to 200°C. Starting from 110 °C a vacuum of 600 mbar was applied. After 1 hour at 200 °C, the vacuum was lowered to 400 mbar. After 1 hour at 400 mbar and 200°C, the vacuum was lowered to 200 mbar. Water was continuously distilled off. The viscosity and the acid number were determined at the times outlined in table 1. The weight-average molecular weight Mw and the number average molecular weight Mn were determined at the times outlined in table 2.

### Example 3b

### Preparation of a polyester polyol using catalyst Ib (in an amount of 37.4 ppm Zr based on the weight of component mixture C1) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and
catalyst **Ib** (115 mg, 0.15 mmol) prepared as described in example 2b was heated under nitrogen to 200°C. Starting from 110 °C a vacuum of 600 mbar was applied. After 1 hour at 200 °C, the vacuum was lowered to 400 mbar. After 1 hour at 400 mbar and 200°C, the vacuum was lowered to 200 mbar. Water was continuously distilled off. The viscosity and the acid number were determined at the times outlined in table 1. The weight-average molecular weight Mw and the number average molecular weight Mn were determined at the times outlined in table 2.

**Table 1.**

| | Preparation polyester polyol from component mixture C1 | | | | | | | |
|---|---|---|---|---|---|---|---|---|
| | Comp ex 1 | | Comp ex 2 | | Ex 3a | | Ex 3b | |
| | DBTL | | Zr-(IV)-butoxide | | Catalyst **Ia** | | Catalyst **Ib** | |
| Time [h] | Viscosity [mPas] | Acid number [mg KOH/g] | Viscosity [mPas] | Acid number [mg KOH/g] | Viscosity [mPas] | Acid number [mg KOH/g] | Viscosity [mPas] | Acid number [mg KOH/g] |
| 2 | 135 | 43.0 | 150 | 41.0 | 180 | 37.0 | 195 | 36.0 |
| 4 | 370 | 27.0 | 505 | 24.0 | 700 | 21.0 | 730 | 21.0 |
| 6 | 775 | 21.0 | 1080 | 19.0 | 1750 | 16.0 | 1900 | 16.0 |
| 8 | 1610 | 16.0 | 2120 | 15.0 | 3500 | 13.0 | 6500 | 11.0 |
| 10 | 2880 | 14.0 | 3700 | 13.0 | 7800 | 11.0 | 14300 | 10.0 |
| 12 | 4200 | 13.0 | 5800 | 12.0 | 15400 | 9.3 | | |
| 13 | | | | | | | 31400 | 8.3 |
| 14 | 5650 | 12.0 | 7900 | 11.0 | 23300 | 8.6 | | |
| 15 | | | | | | | 42000 | 7.9 |
| 16 | 7000 | 11.0 | 10200 | 10.5 | 34500 | 8.1 | | |

**Table 2.**

| | Preparation polyester polyol from component mixture C1 | | | | | | | |
|---|---|---|---|---|---|---|---|---|
| | Comp ex 1 | | Comp ex 2 | | Ex 3a | | Ex 3b | |
| | DBTL | | Zr-(IV)-butoxide | | Catalyst **Ia** | | Catalyst **Ib** | |
| Time [h] | Mn [g/mol] | Mw [g/mol] | Mn [g/mol] | Mw [g/mol] | Mn [g/mol] | Mw [g/mol] | Mn [g/mol] | Mw [g/mol] |
| 4 | 5240 | 10680 | 5770 | 12650 | 6630 | 14600 | 6610 | 15200 |
| 6 | 6850 | 15040 | 7060 | 16780 | 8150 | 20750 | 8020 | 21130 |
| 8 | 8610 | 20040 | 8240 | 21360 | 9660 | 26030 | 11380 | 31180 |
| 10 | 9810 | 24340 | 9560 | 26860 | 10750 | 33450 | 12390 | 39180 |
| 12 | 10100 | 28200 | 11230 | 31530 | 11810 | 40530 | | |
| 13 | | | | | | | 13190 | 48270 |
| 14 | 10550 | 30730 | 11870 | 34510 | 13330 | 45430 | | |
| 15 | | | | | | | 13530 | 52000 |
| 16 | 11170 | 32460 | 12240 | 36650 | 13300 | 49860 | | |

Table 1 and table 2 show that in the process of preparing a polyester polyol from component mixture C1 the acid number decreases faster, and the viscosity, the weight-average molecular weight and the number-average molecular weight increase faster in the presence of catalyst **Ia** and catalyst **Ib**, respectively, than in the presence of Zr-(IV)-butoxide or dibutyltin dilaurate (DBTL). Thus, table 1 and table 2 show that the preparation of a polyester polyol from component mixture C1 proceeds faster in the presence of catalyst **la** and catalyst **Ib,** respectively, than in the presence of Zr-(IV)-butoxide or dibutyltin dilaurate (DBTL). The preparation of a polyester polyol from component mixture C1 proceeds even faster in the presence of catalyst **Ib** than in the presence of catalyst **Ia**.

### Example 4a

### Preparation of a polyester polyol using Zr-(IV)-butoxide (in an amount of 37.4 ppm Zr based on the weight of component mixture C1) and compound IIa (1.00 equivalent with regard to Zr-(IV)-butoxide) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and Zr-(IV) butoxide solution (80% Zr-(IV)-butoxide in 1-butanol) (72.7 mg, 0.15 mmol) and compound **IIa** (88.2 mg, 0.15 mmol) prepared as described in example 1a was heated under nitrogen to 200°C. Starting from 110 °C a vacuum of 600 mbar was applied. After 1 hour at 200 °C, the vacuum was lowered to 400 mbar. After 1 hour at 400 mbar and 200 °C, the vacuum was lowered to 200 mbar. Water was continuously distilled off. The viscosity and the acid number were determined at the times outlined in table 3. The weight-average molecular weight Mw and the number-average molecular weight Mn were determined at the times outlined in table 4.

**Table 3.**

| | Preparation polyester polyol from component mixture C1 | | | | | |
|---|---|---|---|---|---|---|
| | Comp ex 2 | | Ex 3a | | Ex 4a | |
| | Zr-(IV)-butoxide | | Catalyst **Ia** | | Zr-(IV)-butoxide, 1 eq. compound **IIa** | |
| Time [h] | Viscosity [mPas] | Acid number [mg KOH/g] | Viscosity [mPas] | Acid number [mg KOH/g] | Viscosity [mPas] | Acid number [mg KOH/g] |
| 2 | 150 | 41.0 | 180 | 37.0 | 180 | 37 |
| 4 | 505 | 24.0 | 700 | 21.0 | 635 | 22 |
| 6 | 1080 | 19.0 | 1750 | 16.0 | 1700 | 16 |
| 8 | 2120 | 15.0 | 3500 | 13.0 | 3525 | 14 |
| 10 | 3700 | 13.0 | 7800 | 11.0 | 6800 | 12 |
| 12 | 5800 | 12.0 | 15400 | 9.3 | 10750 | 11 |
| 14 | 7900 | 11.0 | 23300 | 8.6 | 15200 | 10 |
| 16 | 10200 | 10.5 | 34500 | 8.1 | 20000 | 9,6 |

**Table 4.**

| | Preparation polyester polyol from component mixture C1 | | | | | |
|---|---|---|---|---|---|---|
| | Comp ex 2 | | Ex 3a | | Ex 4a | |
| | Zr-(IV)-butoxide | | Catalyst **Ia** | | Zr-(IV)-butoxide, 1eq. compound **IIa** | |
| Time [h] | Mn [g/mol] | Mw [g/mol] | Mn [g/mol] | Mw [g/mol] | Mn [g/mol] | Mw [g/mol] |
| 4 | 5770 | 12650 | 6630 | 14600 | 6110 | 13940 |
| 6 | 7060 | 16780 | 8150 | 20750 | 7390 | 20540 |
| 8 | 8240 | 21360 | 9660 | 26030 | 9480 | 26470 |
| 10 | 9560 | 26860 | 10750 | 33450 | 10680 | 32040 |
| 12 | 11230 | 31530 | 11810 | 40530 | 11290 | 36742 |
| 14 | 11870 | 34510 | 13330 | 45430 | 12170 | 40740 |
| 16 | 12240 | 36650 | 13300 | 49860 | 12250 | 44080 |

Table 3 and table 4 show that in the process of preparing a polyester polyol from component mixture C1 the acid number decreases faster, and the viscosity, the weight-average molecular weight and the number-average molecular weight increase faster in the presence of catalyst I**a** and the catalyst prepared *in-situ* from Zr-(IV)-butoxide and 1 equivalent of compound **IIa,** respectively, than in the presence of Zr-(IV)-butoxide. Thus, table 3 and table 4 show that the preparation of a polyester polyol from component mixture C1 proceeds faster in the presence of catalyst **la** and the catalyst prepared *in-situ* from Zr-(IV)-butoxide and 1 equivalent of compound **IIa,** respectively, than in the presence of Zr-(IV)-butoxide. The preparation of a polyester polyol from component mixture C1 proceeds even faster in the presence of catalyst **la** than in the presence of the catalyst prepared *in-situ* from Zr-(IV)-butoxide and 1 equivalent of compound **IIa.**

### Example 4b

### Preparation of a polyester polyol using Zr-(IV)-butoxide (in an amount of 37.4 ppm Zr based on the weight of component mixture C1) and compound IIb (1.00 equivalent with regard to Zr-(IV)-butoxide) from component mixture C1

Component mixture C1 is a mixture of adipic acid (205 g, 1.4 mol) and 1,6-hexandiol (165 g, 1.4 mol)
A mixture of adipic acid (205 g, 1.4 mol),1,6-hexandiol (165 g, 1.4 mol) and Zr-(IV) butoxide solution (80% Zr-(IV)-butoxide in 1-butanol) (72.7 mg, 0.15 mmol) and compound **IIb** (87.6 mg, 0.15 mmol) prepared as described in example 1b was heated under nitrogen to 200°C. Starting from 110 °C a vacuum of 600 mbar was applied. After 1 hour at 200 °C, the vacuum was lowered to 400 mbar. After 1 hour at 400 mbar and 200 °C, the vacuum was lowered to 200 mbar. Water was continuously distilled off. The viscosity and the acid number were determined at the times outlined in table 5. The weight-average molecular weight Mw and the number-average molecular weight Mn were determined at the times outlined in table 6.

**Table 5.**

| | Preparation polyester polyol from component mixture C1 | | | | | |
|---|---|---|---|---|---|---|
| | Comp ex 2 | | Ex 3b | | Ex 4b | |
| | Zr-(IV)-butoxide | | Catalyst **Ib** | | Zr-(IV)-butoxide, 1 eq. compound **IIb** | |
| Time [h] | Viscosity [mPas] | Acid number [mg KOH/g] | Viscosity [mPas] | Acid number [mg KOH/g] | Viscosity [mPas] | Acid number [mg KOH/g] |
| 2 | 150 | 41.0 | 195 | 36.0 | 160 | 39.0 |
| 4 | 505 | 24.0 | 730 | 21.0 | 565 | 22.0 |
| 6 | 1080 | 19.0 | 1900 | 16.0 | 1840 | 15.0 |
| 8 | 2120 | 15.0 | 6500 | 11.0 | 6700 | 11.0 |
| 10 | 3700 | 13.0 | 14300 | 10.0 | 13700 | 9.9 |
| 12 | 5800 | 12.0 | | | | |
| 13 | | | 31400 | 8.3 | 21500 | 9.0 |
| 14 | 7900 | 11.0 | | | | |
| 15 | | | 42000 | 7.9 | 25000 | 8.9 |
| 16 | 10200 | 10.5 | | | | |

**Table 6.**

| | Preparation polyester polyol from component mixture C1 | | | | | |
|---|---|---|---|---|---|---|
| | Comp ex 2 | | Ex 3b | | Ex 4b | |
| | Zr-(IV)-butoxide | | Catalyst **Ib** | | Zr-(IV)-butoxide, 1eq. compound **IIb** | |
| Time [h] | Mn [g/mol] | Mw [g/mol] | Mn [g/mol] | Mw [g/mol] | Mn [g/mol] | Mw [g/mol] |
| 4 | 5770 | 12650 | 6610 | 15200 | 5980 | 13230 |
| 6 | 7060 | 16780 | 8020 | 21130 | 8390 | 20830 |
| 8 | 8240 | 21360 | 11380 | 31180 | 10360 | 32140 |
| 10 | 9560 | 26860 | 12390 | 39180 | 11170 | 38490 |
| 12 | 11230 | 31530 | | | | |
| 13 | | | 13190 | 48270 | 11830 | 43660 |
| 14 | 11870 | 34510 | | | | |
| 15 | | | 13530 | 52000 | 12660 | 46840 |
| 16 | 12240 | 36650 | | | | |

Table 5 and table 6 show that in the process of preparing a polyester polyol from component mixture C1 the acid number decreases faster, and the viscosity, the weight average molecular weight and the number average molecular weight increase faster in the presence of catalyst **Ib** and the catalyst prepared *in-situ* from Zr-(IV)-butoxide and 1 equivalent of compound **IIb,** respectively, than in the presence of Zr-(IV)-butoxide. Thus, table 5 and table 6 show that the preparation of a polyester polyol from component mixture C1 proceeds faster in the presence of catalyst **Ib** and the catalyst prepared *in-situ* from Zr-(IV)-butoxide and 1 equivalent of compound **IIb,** respectively, than in the presence of Zr-(IV)-butoxide. The preparation of a polyester polyol from component mixture C1 proceeds even faster in the presence of catalyst **Ib** than in the presence of the catalyst prepared *in-situ* from Zr-(IV)-butoxide and 1 equivalent of compound **IIb.**

### Comparative example 3

### Preparation of a polyester polyol using Ti-(IV)-butoxide/Sn-(II)-2-ethylhexanoate (in an amount of 2.6 ppm metal based on the weight of component mixture C2a)

Component mixture C2a is a mixture of adipic acid (1758.2 g, 12.03 mol) and 1,4-butandiol (1175.3 g, 13.04 mol)
A mixture of adipic acid (1758.2 g, 12.03 mol),1,4-butandiol (1175.3 g, 13.04 mol) and Ti-(IV) butoxide (2.5 mg, 0.0073 mmol) was heated under nitrogen to 240°C. Water was continuously distilled off. After 120 minutes Sn-(II)-2-ethylhexanoate (25 mg, 0.0617 mmol) was added. Water was continuously distilled off. The acid number was determined at the times outlined in table 7.

### Example 5a

### Preparation of a polyester polyol using catalyst la (in an amount of 2.1 ppm Zr based on the weight of component mixture C2b)

Component mixture C2b is a mixture of adipic acid (1758.6 g, 12.03 mol) and 1,4-butandiol (1210.4 g, 13.43 mol)
A mixture of adipic acid (1758.6 g, 12.03 mol),1,4-butandiol (1210.4 g, 13.43 mol) and catalyst **la** (55 mg, 0.0693 mmol) prepared as described in example 2a was heated under nitrogen to 240°C. Water was continuously distilled off. After ca. 90 minutes, the pressure was decreased to 40 mbar in 30 min and the distillation was continued. The acid number was determined at the times outlined in table 7.

### Example 5b

### Preparation of a polyester polyol using catalyst Ib (in an amount of 2.2 ppm Zr based on the weight of component mixture C2b)

Component mixture C2b is a mixture of adipic acid (1758.6 g, 12.03 mol) and 1,4-butandiol (1210.4 g, 13.43 mol)
A mixture of adipic acid (1758.6 g, 12.03 mol),1,4-butandiol (1210.4 g, 13.43 mol) and catalyst **Ib** (55 mg, 0.0693 mmol) prepared as described in example 2b was heated under nitrogen to 240°C. Water was continuously distilled off. After ca. 90 minutes, the pressure was decreased to 40 mbar in 30 min and the distillation was continued. The acid number was determined at the times outlined in table 7.

**Table 7.**

| | Preparation polyester polyol from component mixture | | |
|---|---|---|---|
| | C2a | C2b | C2b |
| | | | |
| | Comp ex 3 | Ex 5a | Ex 5b |
| | Ti-(IV)-butoxide/Sn-(II)-2-ethylhexanoate | Catalyst **Ia** | Catalyst **Ib** |
| Time [min] | Acid number [mg KOH/g] | Acid number [mg KOH/g] | Acid number [mg KOH/g] |
| 105 | 21,3 | 18,0 | 18,7 |
| 165 | 11,9 | 10,6 | 11,6 |
| 225 | 5,2 | 3,9 | 4,5 |
| 285 | 2,6 | 1,4 | 1,8 |
| 345 | 1,3 | 0,8 | 0,6 |

Table 7 shows that that in the process of preparing a polyester polyol from component mixture C2a or C2b, which are very similar, the acid number decreases faster in the presence of catalyst **la** and catalyst **Ib,** respectively, than in the presence of Ti-(IV-butoxide/Sn-(II)-2-ethylhexanoate. Thus, table 7 show sthat the preparation of a polyester polyol from component mixture C2a or C2b proceeds faster in the presence of catalyst **la** and catalyst **Ib,** respectively, than in the presence of Ti-(IV-butoxide/Sn-(II)-2-ethylhexanoate.

## Claims

1. A process for the preparation of polyester polyols, which process comprises the step of reacting at least one compound, oligomer or polymer carrying at least one acidic group or a derivative thereof (**A1**) and at least one polyol not carrying an acidic group (**B1**) and optionally at least one monoalcohol not carrying an acidic group (**B2**) in the presence of a catalyst of formula
((R^{1a})²⁻)ₓ((R^{1b})⁻)_{y}((R²)⁻)_{z}(M^{a})⁴⁺ (**I**)
wherein
(R^{1a})²⁻ is a dianion of formula 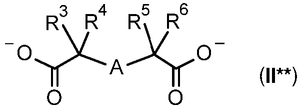
wherein
R³, R⁴, R⁵ and R⁶ are mutually independently an unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal
and
A is unsubstituted or at least monosubstituted linear C₃₋₃₀-alkylene, wherein the substituents are selected from the group consisting of -OH, halogen, -C(=O)-OM², -CF₃, -NH₂, - NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇₋₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
(R^{1b})⁻ is an anion of formula 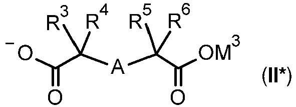
R³, R⁴, R⁵ and R⁶ are mutually independently an unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
and
A is unsubstituted or at least monosubstituted linear C₃₋₃₀-alkylene, wherein the substituents are selected from the group consisting of -OH, halogen, -C(=O)-OM², -CF₃, -NH₂, - NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein at least one CH₂ group of C₃-C₃₀-alkylene may be replaced by a heteroatom independently selected from the group consisting of O, S, NH, N-C₁₋₃₀-alkyl, N-C₆₋₁₄-aryl and N-C₇₋₃₀-aralkyl, wherein alkyl and aryl fragments of N-C₁₋₃₀-alkyl, N-C₆₋₁₄-aryl, N-C₇₋₃₀-aralkyl may at least be monosubstituted by hydroxyl, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl,
M³ is H or metal,
and
(R²)⁻ is HO⁻, R⁸-O⁻, halide anion, HO-C(=O)-O⁻, R⁹-S⁻, or an anion of formula 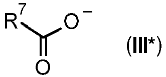
wherein
R^{7,} R⁸ and R⁹ are an organic residue, with the proviso that the anion of formula (III*) is different from the anion of formula (II*),
(M^{a})⁴⁺ is a tetravalent metal,
x is 0, 1 or 2,
y is 0, 1, 2, 3 or 4,
z is 0,1, 2 or 3
with the proviso that the sum of 2x + y + z = 4.

2. The process of claim 1, wherein (R^{1a})²⁻ is a dianion of formula 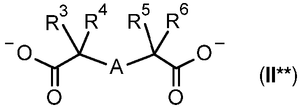
wherein at least one, preferably at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -OH, halogen, - C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, - N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, - CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
and
A is unsubstituted or at least monosubstituted linear C₃₋₃₀-alkylene, wherein the substituents are selected from the group consisting of -OH, halogen,-C(=O)-OM², -CF₃, -NH₂, - NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein one, two, three, four, five or six CH₂ groups of C₃₋₃₀-alkylene may be replaced by a heteroatom independently selected from the group consisting of O and S, preferably by O.

3. The process of claim 1, wherein (R^{1a})²⁻ is a dianion of formula 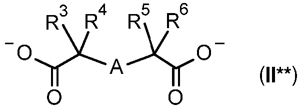 wherein
at least one, preferably at least two, more preferably at least three of R³, R⁴, R⁵ or R⁶ is phenyl, and most preferably each of R³, R⁴, R⁵ and R⁶ is phenyl
and
A is unsubstituted linear C₅₋₂₀-alkylene, wherein one or two, three, four or five CH₂ groups of C₅₋₂₀-alkylene are replaced by a heteroatom independently selected from the group consisting of O and S, preferably by O.

4. The proess of any of claims 1 to 3, wherein (R^{1b})⁻ is an anion of formula 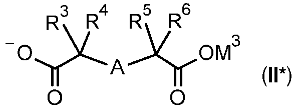
wherein at least one, preferably at least two, more preferably at least three of R³, R⁴, R⁵ or R⁶, most preferably each of R³, R⁴, R⁵ and R⁶ is unsubstituted or at least monosubstituted phenyl, wherein the substituents are selected from the group consisting of -OH, halogen, - C(=O)-OM¹, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, - N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, - CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M¹ is H or metal,
and
A is unsubstituted or at least monosubstituted linear C₃₋₃₀-alkylene, wherein the substituents are selected from the group consisting of -OH, halogen,-C(=O)-OM², -CF₃, -NH₂, - NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -CF₃, NH₂, -NH-C₁₋₆-alkyl, - NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, wherein M² is H or metal, and
wherein one, two, three, four, five or six CH₂ groups of C₃₋₃₀-alkylene may be replaced by a heteroatom independently selected from the group consisting of O and S, preferably by O,
and M³ is H or metal.

5. The process of any of claims 1 to 4, wherein (R^{1b})⁻ is an anion of formula 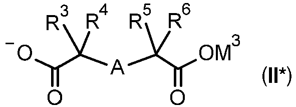 wherein
at least one, preferably at least two, more preferably at least three of R³, R⁴, R⁵ or R⁶ is phenyl, and most preferably each of R³, R⁴, R⁵ and R⁶ is phenyl
and
A is unsubstituted linear C₅₋₂₀-alkylene, wherein one or two, three, four or five CH₂ groups of C₅₋₂₀-alkylene are replaced by a heteroatom independently selected from the group consisting of O and S, preferably by O,
and M³ is H or metal.

6. The process of any of claims 1 to 5, wherein (R²)⁻ is at each occurrence selected from the group consisting of R⁸-O⁻ and an anion of formula 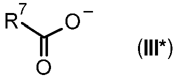 wherein
R⁷ and R⁸ are independently and at each occurence unsubstituted or at least monosubstituted C₁₋₃₀-alkyl, C₆₋₁₄-aryl or C₇₋₃₀-aralkyl, wherein the substituents are selected from the group consisting of -OH, halogen, -C(=O)-OM⁴, -CF₃, -NH₂, -NH-C₁₋₃₀-alkyl, -NH-C₆₋₁₄-aryl, -NH-C₇₋₃₀-aralkyl, -N(C₁₋₃₀-alkyl)₂, -N(C₆₋₁₄-aryl)₂, -N(C₇₋₃₀-aralkyl)₂, -SH, -S-C₁₋₃₀-alkyl, -S-C₆₋₁₄-aryl, -S-C₇₋₃₀-aralkyl, -O-C₁₋₃₀-alkyl, -O-C₆₋₁₄-aryl, -O-C₇₋₃₀-aralkyl, C₁₋₃₀-alkyl and C₆₋₁₄-aryl, and the alkyl and aryl fragments of these substituents may in turn be at least monosubstituted by -OH, halogen, -C(=O)-OM³, -CF₃, NH₂, -NH-C₁₋₆-alkyl, -NH-phenyl, - N(C₁₋₆-alkyl)₂, -N(phenyl)₂, -SH, -S-C₁₋₆-alkyl, -S-phenyl, -O-C₁₋₆-alkyl, O-phenyl or C₁₋₆-alkyl, wherein M⁴ is H or metal,
wherein at least one CH₂ group, preferably one to ten CH₂ groups, more preferably one, two, three, four, five or six CH₂ groups, of C₁₋₃₀-alkyl may be replaced by a heteroatom independently selected from the group consisting of O, S, NH, N-C₁₋₃₀-alkyl, N-C₆₋₁₄-aryl and N-C₇₋₃₀-aralkyl, wherein alkyl and aryl fragments of N-C₁₋₃₀-alkyl, N-C₆₋₁₄-aryl, N-C₇₋₃₀-aralkyl may at least be monosubstituted by -OH halogen, -CF₃, NH₂, -NH-C₁₋₆-alkyl, -NH-phenyl, -N(C₁₋₆-alkyl)₂, -N(phenyl)₂, -SH, -S-C₁₋₆-alkyl, -S-phenyl, -O-C₁₋₆-alkyl or -O-phenyl, preferably by O,
with the proviso that the anion of formula (III*) is different from the anion of formula (II*).

7. The process of any of claims 1 to 6, wherein (R²)⁻ is R⁸-O⁻, wherein R⁸ is unsubstituted or at least monosubstituted C₁₋₁₀-alkyl.

8. The process of any of claim 1 to 7, wherein (M^{a})⁴⁺ is a tetravalent metal selected from the group consisting of Zr⁴⁺, Ti⁴⁺, Sn⁴⁺ and Hf⁴⁺.

9. The process of any of claim 1 to 8, wherein x is 1 or 2, y is 0, 1 or 2, and z is 0, 1 or 2, with the proviso that the sum of 2x + y + z = 4.

10. The process of claim 1, wherein the catalyst of formula (I) is obtainable by a process comprising the step of reacting
((R²)⁻)₄(M^{a})⁴⁺(R²H) (VI)
wherein
(R²)⁻ and (M^{a})⁴⁺ are as defined for the catalyst of formula (I) in claim 1, and
R² is a radical of the anion (R²)⁻,
with at least one compound of a formula 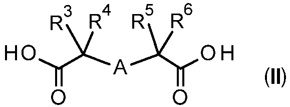
wherein R³, R⁴, R⁵ und R⁶ are as defined for the catalyst of formula (I) in claim 1, or a corresponding salt thereof.

11. The process of any of claims 1 to 10, wherein the compound, oligomer or polymer carrying at least one acidic group or a derivative thereof **(A1)** is an aliphatic compound carrying one or two COOH groups or a derivative thereof.

12. The process of any of claims 1 to 11, wherein the polyol not carrying an acidic group **(B1)** is an aliphatic polyol not carrying an acidic group.

13. The process of any of claims 1 to 12, wherein the step of reacting at least one compound, oligomer or polymer carrying at least one acidic group or a derivative thereof **(A1)** and at least one polyol not carrying an acidic group **(B1)** and optionally at least one monoalcohol not carrying an acidic group **(B2)** in the presence of a catalyst of formula **(I)** is performed at a pressure in the range of 1 to 1100 mbar.

14. The process of any of claims 1 to 13, wherein the step of reacting at least one compound, oligomer or polymer carrying at least one acidic group or a derivative thereof **(A1)** and at least one polyol not carrying an acidic group **(B1)** and optionally at least monoalcohol not carrying an acidic group **(B2)** in the presence of a catalyst of formula **(I)** is performed at a temperature in the range of 150 to 260 °C

15. The process of any of claims 1 to 14, wherein the equivalent ratio of OH groups of B1 and B2 to acidic groups of A1 is preferably in the range of 0.8/1.0 to 2.4/1.0,

16. The processs of any of claims 1 to 15, wherein the amount of catalyst of formula (I) is 0.5 to 500 ppm (M^{a})⁴⁺ based on the weight of A1, B1 and B2.

17. A polyester polyol obtainable by the process of any of claims 1 to 16.

18. The use of the polyester polyol of claim 17 for the preparation of polyurethane.
